(19) **Europäisches Patentamt**
**European Patent Office**
**Office européen des brevets**

(11) **EP 2 568 744 A1**

(12) **EUROPEAN PATENT APPLICATION**
published in accordance with Art. 153(4) EPC

(43) Date of publication:
**13.03.2013 Bulletin 2013/11**

(51) Int Cl.:
**H04W 36/02** $^{(2009.01)}$     **H04W 88/08** $^{(2009.01)}$

(21) Application number: **11777452.1**

(22) Date of filing: **28.04.2011**

(86) International application number:
**PCT/JP2011/060479**

(87) International publication number:
**WO 2011/138933 (10.11.2011 Gazette 2011/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.05.2010 JP 2010106575**

(71) Applicant: **NTT DoCoMo, Inc.**
**Tokyo 100-6150 (JP)**

(72) Inventors:
• **EBARA, Hidetoshi**
  **Tokyo 100-6150 (JP)**

• **MAEDA, Masato**
  **Tokyo 100-6150 (JP)**
• **KOMATSU, Shinji**
  **Tokyo 100-6150 (JP)**

(74) Representative: **Maury, Richard Philip**
**Marks & Clerk LLP**
**90 Long Acre**
**London**
**WC2E 9RA (GB)**

(54) **BASE STATION APPARATUS AND METHOD IN MOBILE COMMUNICATION SYSTEM**

(57) A base station 100 receives downlink radio quality information (CQI value) from a mobile station, stores down link data, and transmits it to the mobile station. The base station includes a timing controller 107 and obtains an estimated downlink data rate (DRp), based on the downlink radio quality information, wherein, when the DRp is less than a rate for receiving the down link data from a network apparatus (DRp < DRr), the base station calculates a data transmission completion time period based on an amount of unsent data (Ar) and the estimated downlink data rate (DRp). When the mobile station performs a handover, the network apparatus is caused not to transmit the down link data, addressed to the mobile station, to the base station at and subsequent to time which is prior to switching (AT) the base station by the data transmission completion time period ($T_{stop} = AT - D_{comp}$).

FIG.1A

EP 2 568 744 A1

Printed by Jouve, 75001 PARIS (FR)

## Description

TECHNICAL FIELD

The disclosed invention relates to a base station apparatus and a method for a mobile communication system.

BACKGROUND ART

During mobile communication, a mobile station performs communications with network apparatuses, the network apparatuses include a base station apparatus and a radio network controller. The network apparatuses may include a core network. The mobile station detects multiple cells that can be targets for communications or candidates for communications, and measures radio quality in the cells. When a measured value of the radio quality of a communication candidate cell satisfies a predetermined condition, a communication target cell is switched. For example, when it is determined that a newly detected cell will provide relatively better radio quality than that of a cell that has already been performing communications, the communication target cell is switched to the newly detected cell.

A high-speed downlink packet access (HSDPA) scheme realizes high-speed down link communication for the wideband code division multiple access (W-CDMA) communication scheme. In this case, an A-DPCH (Associated Dedicated Physical CHannel) simultaneously performs communications with up to three cells. However, an HS-PDSCH (High Speed-Physical Downlink Shared CHannel) sets only one cell that has the best radio quality as a communication target. The cell which has been selected as the cell having the best quality is called a "Serving Cell." Since the A-DPCH is the communication based on a dedicated channel, a soft handover is performed. While maintaining the communication with the serving cell, only the switching target cell is switched depending on necessity. On the other hand, since the HS-PDSCH is the communication based on a down link shared or common channel (Shared channel), there is only one cell that can be a communication target. Therefore, when a cell is switched due to, for example, movement of a user, a handover is performed, and thereby a short interruption occurs temporarily. A conventional handover is described in Patent Document 1, for example.

Further, during communication based on the HSDPA scheme, the mobile station measures quality (such as SIR) of a CPICH, which is a pilot channel in the serving cell. The mobile station derives a channel quality indicator (CQI: Channel Quality Indicator) based on the measurement result. The derived CQI is reported from the mobile station to the network apparatus. As a result, the network apparatus can recognize a reception environment (radio quality) of the mobile station, and the mobile station can adaptively switch a modulation scheme and a transmission data amount for down link data, depending on the environment. It is called adaptive modulation and channel coding to adaptively switch the data modulation scheme and the amount of data (or the channel coding rate). Relationships of the down link data modulation scheme and a transport block size (Transport Block size) with respect to individual values of the CQI are defined in a 3GPP specification (cf. Non-Patent Document 2).

As described above, for the case of the communication based on the HSDPA scheme, transmission of the down link data is temporarily interrupted during switching of the serving cell. Specifically, prior to performing the switching of the serving cell, the switching of the serving cell is prepared for, while performing communication with the communication source cell, which has been communicating. At switching timing (AT: Activation Time) designated by the network apparatus, processes for switching the serving cell are simultaneously performed both at the side of the network and at the side of the mobile station. A time period during which the mobile station is not able to receive the downlink data is determined depending on the timing during which the base station apparatus, which is for prior to switching, continues transmitting the down link data, and the timing from which a base station apparatus, which is for after the switching, starts transmitting the down link data. If the down link data is transmitted from the base station in the time period during which the mobile station is not able to receive the downlink data, the mobile station is not able to suitably receive it. After the process of switching the HS-PDSCH has been completed, the mobile station is able to receive the down link data from the destination base station apparatus, which has newly become a serving cell.

On the other hand, in an area where relatively many users exist, such as an urban area or a busy district, an installed number of base station apparatuses is increased so as to distribute the communication capacity of the network apparatuses, and a communication area is constructed by using multiple cells. Therefore, in a case where communication is performed at a place where it is expected that there are many users, the mobile station often detects multiple cells. There are advantages and disadvantages for the existence of the multiple cells having fine radio quality to the extent that the mobile station can set the cells as the communication targets, when the mobile station performs communication with the network apparatus. When the user itself moves or a neighboring object varies, the radio environment varies due to fading, for example, and the communication tends to be interrupted. However, when there are many cells, each having relatively good quality, there is an advantage that it can be made easy to avoid interrupting the communication by suitably switching to them. However, when there are many communication candidate cells, a number of times to find cells which are better than current one is increased. Therefore, the communication cell has to be frequently switched as changes occur in the relative radio quality.

When the switching of the communication target cell frequently occurs during the HSDPA communication, the switching of the HS-PDSCH from the serving cell is also frequently performed. As described above, between the mobile station and the network apparatus, the down link data is communicated by the HS-PDSCH of the shared channel. When the communication target cell is to be switched, the communication of the down link data is temporarily discontinued, and the process of switching the cell is performed. Therefore, if the switching of the HS-PDSCH frequently occurs, the frequency that the down link data is interrupted is also increased. Accordingly, it is possible that the communication speed of the down link data is lowered.

On the other hand, when the switching of the serving cell is to be performed, as described above, the mobile station prepares for the switching while performing the communication with the base station apparatus, which is for prior to the switching. At the timing for the switching (AT: Activation Time) designated by the network apparatus, the processes for switching the serving cell are simultaneously performed both at the side of the network (e.g., the base station apparatus and a base station controller (RNC)) and at the side of the mobile station. During the interval in which the mobile station is performing the switching of the serving cell, the mobile station is not able to receive the down link data. During the handover, the mobile station preferably receives all the down link data from the base station apparatus, which is for prior to the switching. The down link data has been received by the base station, which is for prior to the switching, from the network apparatus. To ensure this, the timing for the network apparatus to stop transmitting the down link data to the base station apparatus, which is for prior to the switching, is fixed to the time that is considerably previous to the timing for the switching (AT). It is fixed to timing, such as one second previous to the timing for the switching, in advance by the system. Therefore, the network apparatus stops transmitting the down link data, which is addressed to the mobile station, to the base station apparatus, which is for prior to the switching, considerably prior to the time becoming the timing for the switching (AT).

## RELATED ART DOCUMENT

[PATENT DOCUMENT]

Patent document 1: Japanese Patent Laid-Open Application No. 2003-188775

[NON-PATENT DOCUMENT]

Non-patent document 1: 3GPP TS25.331 v6.24.0(2009-12)
Non-patent document 2: 3GPP TS25.214 v6.11.0(2006-12)

## SUMMARY OF THE INVENTION

PROBLEM TO BE SOLVED BY THE INVENTION

Incidentally, a radio channel state of a mobile station for a mobile communication system differs in various ways depending on a location and a time, for example. Therefore, a transmission rate of down link data differs depending on the mobile station. Therefore, when the same amount of data is transmitted from a base station apparatus, the base station apparatus may quickly complete transmission to a mobile station which can achieve a high data transmission rate. On the other hand, the base station apparatus is not able to quickly complete the transmission to a mobile station which can only achieve a low data transmission rate. When a point of time for the network apparatus to stop transmitting the down link data to the base station apparatus, which is for prior to the switching for the handover, is fixed to a time that is considerably previous to the timing for the switching (AT), the point of time is not always optimum for individual mobile stations. Rather, it may be necessary for the mobile station that can achieve the high data transmission rate to wait for the time to become the timing for the switching (AT) without being able to communicate, though there is no data to be received. This is not preferable from the viewpoint of improving data throughput. Conversely, for a case of the mobile station which can only achieve a low data transmission rate, it is possible that the time becomes the timing for the switching (AT) prior to transmitting the entire data from the base station apparatus, which is for prior to the switching, to the mobile station. If the base station apparatus, which is for prior to the switching, transmits the remaining data to the mobile station subsequent to the timing for the switching (AT), since the mobile station is not able to suitably receive it, all such data becomes a subject of retransmission in the cell, which is for subsequent to the switching. As a consequence, it is possible that the data throughput is lowered.

The problem of the disclosed invention is to improve the data throughput when the serving cell is switched by a hard hand over scheme.

## MEANS FOR SOLVING THE PROBLEM

A base station apparatus according to an aspect of the disclosed invention is a base station apparatus for a mobile communication system including

a receiver that receives down link radio quality information from a mobile station;
a data buffer that stores down link data to be transmitted to the mobile station;

a transmitter that transmits the down link data to the mobile station; and

a timing controller that determines an estimated downlink data rate indicating a data rate that can be achieved for a down link based on the down link radio quality information and that calculates, when the estimated downlink data rate is less than a reception rate for receiving the down link data from a network apparatus, a data transmission completion time period based on an amount of data stored in the data buffer and the estimated downlink data rate,

wherein, when the mobile station is to perform a handover, the timing controller reports to the network apparatus that the network apparatus should not transmit the down link data, the downlink data being addressed to the mobile station, to the base station apparatus at and subsequent to a point of time, the point of time being prior to timing for switching the base station apparatus by, at least, the data transmission completion time period.

## EFFECT OF THE PRESENT INVENTION

According to the disclosed invention, the data throughput can be improved for the case where the serving cell is switched by the hard handover scheme.

## BRIEF DESCRIPTION OF THE DRAWINGS

FIG. 1A is a functional block diagram of a base station apparatus;
FIG. 1B is a diagram showing an example of a correspondence relationship between radio quality information and an estimated downlink data rate;
FIG. 2 is a functional block diagram of a mobile station;
FIG. 3 is a sequence diagram illustrating an example of operations in an embodiment; and
FIG. 4 is a flowchart for determining timing to stop reception.

## EMBODIMENTS FOR CARRYING OUT THE INVENTION

A base station apparatus 100 according to an embodiment of the disclosed invention is a base station apparatus including

a receiver 101 that receives down link radio quality information (e.g., CQI value) from a mobile station;
a data buffer 108 that stores down link data to be transmitted to the mobile station;
a transmitter 103 that transmits the down link data to the mobile station; and
a timing controller 107 that determines an estimated downlink data rate (DRp) indicating a data rate that can be achieved for a down link based on the down link radio quality information and that calculates, when the estimated downlink data rate is less than a reception rate for receiving the down link data from a network apparatus (DRp < DRr), a data transmission completion time period ($D_{comp}$) based on an amount of data stored in the data buffer (Ar) and the estimated downlink data rate (DRp),

wherein, when the mobile station is to perform a handover, the timing controller 107 reports to the network apparatus that the network apparatus should not transmit the down link data, the downlink data being addressed to the mobile station, to the base station apparatus at and subsequent to a point of time ($T_{stop} = AT - D_{comp}$), the point of time being prior to timing for switching the base station apparatus by, at least, the data transmission completion time period.

Since the data transmission completion time period ($D_{comp}$) is based on the downlink data rate (DRp) that can be currently achieved by the mobile station (UE), it is a time interval that matches the current state of the mobile station, and the entire remaining data (Ar) can be transmitted to the mobile station (UE) within the time interval. With this, it is not necessary for the mobile station that can achieve a high data transmission rate to wait for time to become timing for the switching (AT) without being able to communicate, though there is no data to be received. Conversely, for a case of the mobile station which can only achieve a low data transmission rate, the time will not become the timing for the switching (AT) prior to transmitting the entire data from the base station apparatus, which is for prior to the switching, to the mobile station. With this, data throughput can be improved for a case where a serving cell is switched according to a hard handover scheme. When the serving cell is to be switched, the time period for interrupting the down link data transmission (the interval between a point of time at which the down link data transmission from the switching source cell has been interrupted and start of the down link data transmission from a switching target cell) can be effectively reduced, and the average transmission rate can be prevented from being lowered.

The data transmission completion time period ($D_{comp}$) may be calculated by dividing the amount of data stored in the data buffer (Ar) by the estimated downlink data rate (DRp).

The base station apparatus may further include a data storing unit 108 for storing a predetermined correspondence relationship between plural types of downlink radio quality information and estimated downlink data rates.

When the estimated downlink data rate is greater than or equal to the reception rate for receiving the down link data from the network apparatus (DRp ≥ DRr), the timing controller 107 may set the data transmission completion time period to be zero. With this, the timing to stop the reception may be identically determined ($T_{stop}$ = AT - $D_{comp}$) irrespective of the inequality relation between the reception rate for receiving the down link data (DRr) from the network apparatus and the estimated downlink data rate (DRp).

<First Embodiment>

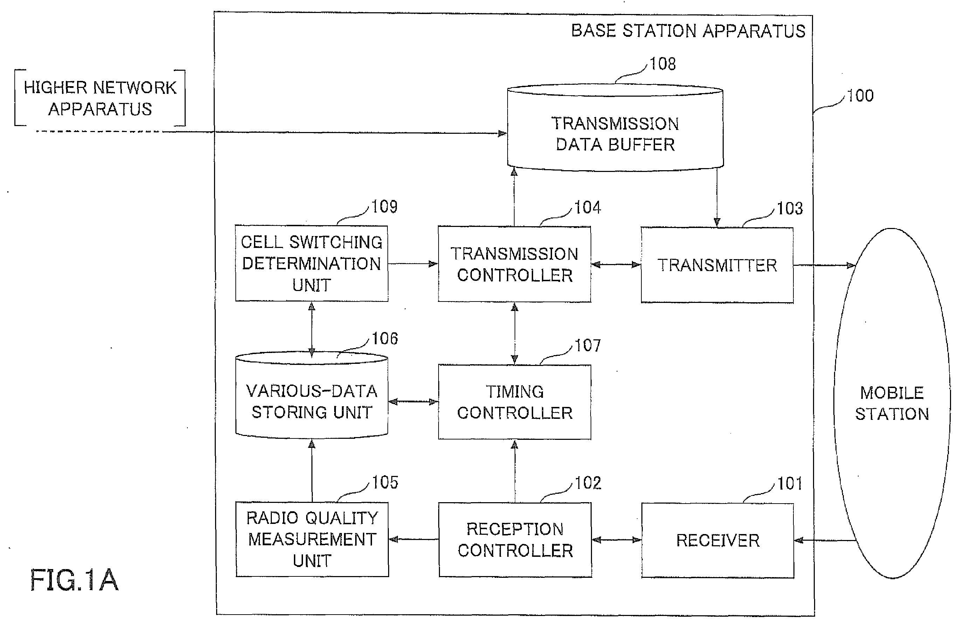

FIG. 1A shows the base station apparatus 100 according to one embodiment. FIG. 1A shows the receiver 101; a reception controller 102; the transmitter 103; a transmission controller 104; a radio quality measurement unit 105; a various-data storing unit 106; the timing controller 107; the transmission data buffer 108; and a switching determination unit 109. FIG. 1A merely shows schematically elements that are particularly related to the embodiment, among various functional elements included in the base station apparatus. Accordingly, the way of dividing the functional elements shown in the figure is for the sake of convenience. For example, two or more functional elements may be realized by a single means. These functional elements may be realized by hardware, software, or a combination thereof.

The receiver 101 receives an up-link signal transmitted from the mobile station. The up-link signal includes various signals such as a data signal, a control signal, and a pilot signal. In the embodiment, especially, the control signal includes information indicating downlink radio quality (CQI: Channel Quality Indicator).

The reception controller 102 controls a receiving process in the receiver 101.

The transmitter 103 transmits the down link data that is from the base station apparatus to the mobile station.

The transmission controller 104 controls a transmitting process in the transmitter 103. In the embodiment, especially, the amount of data remaining in the transmission data buffer 108 is measured and reported to the timing controller 107.

The radio quality measurement unit 105 receives a pilot signal that has been transmitted from the mobile station, and measures an index indicating the radio quality. The index of the radio quality may be expressed by any suitable quantity, such as $Ec/N_0$, RSCP, and the path loss.

The various-data storing unit 106 stores various parameter values, variable values, and calculation results that are used for the base station apparatus. For example, the information stored by the various-data storing unit 106 includes, for example, various correspondence relationships defined in 3GPP specifications (e.g., modulation schemes for the downlink communication and transport block sizes corresponding to the CQI values); the rate of the down link data received from an apparatus (such as a radio network controller or a switching system) which is higher than the base station; and the correspondence relationships between the radio quality information (e.g., the CQI values) and the estimated downlink data rates explained below. However, the information stored by the various-data storing unit 106 is not limited to these.

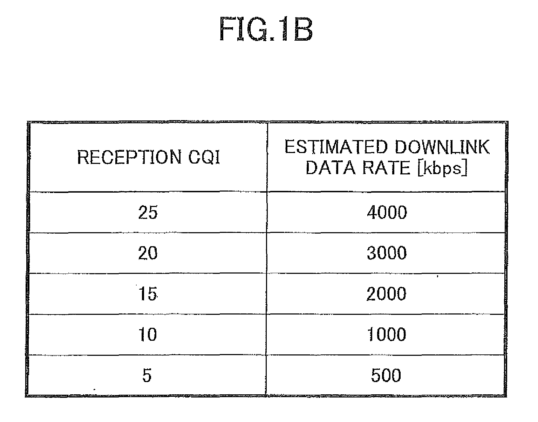

The timing controller 107 determines the timing to stop the reception ($T_{stop}$) which is the timing for the apparatus higher than the base station to stop transmitting the data, which is addressed to the mobile station being switched to the destination of the handover, to the apparatus itself (the handover source base station apparatus), and reports it to the apparatus higher than the base station. In order to calculate the timing to stop the reception ($T_{stop}$), first the timing controller 107 obtains the downlink data reception rate (DRr) and the estimated downlink data rate (DRp). The downlink reception data rate (DRr) is a data transmission rate for the base station apparatus 100 to receive the down link data addressed to individual mobile stations from the higher apparatus (the radio network controller and an apparatus of the core network). The estimated downlink data rate (DRp) is the data rate that can be achieved in the current down link of the mobile station, based on the radio quality information reported from the mobile station. The estimated downlink data rate (DRp) may be obtained by a calculation, or it may be derived based on a predetermined correspondence relationship such as shown in FIG. 1B. Such correspondence relationship is stored in the various-data storing unit 106.

Regarding the mobile station being switched to the target of the handover, the timing controller 107 calculates the data transmission completion time period ($D_{comp}$), based on the downlink data reception rate (DRr), the estimated downlink data rate (DRp), and the amount of the data remaining untransmitted (Ar). When the estimated downlink data rate is less than the downlink data reception rate (DRp < DRr), the data transmission completion time period ($D_{comp}$) is obtained by dividing the amount of the remaining data by the estimated downlink data rate ($D_{comp}$ = Ar / DRp). When the estimated downlink data rate is greater than or equal to the downlink data reception rate (DRp ≥ DRr), the data transmission completion time period ($D_{comp}$) is set to be zero ($D_{comp}$ = 0). Then the timing controller 107 derives the timing to stop the reception ($T_{stop}$) by shifting the timing in the backward direction from the timing to switch the cell (AT) by the data transmission completion time period ($D_{comp}$) ($T_{stop}$ = AT - $D_{comp}$). Here, taking the processing speeds of the hardware and the software of the mobile station into consideration, the timing to stop the reception ($T_{stop}$) may be set at a point of time that is prior to the point of time, which is shifted in the backward direction from the timing for switching the cell (AT) by the data transmission completion time period ($D_{comp}$), by a certain amount ($T_{stop}$ = AT - $D_{comp}$ - $\alpha$).

The transmission data buffer 108 stores the down link data received from the apparatus that is higher than the base station.

When the mobile station performs the handover, the cell switching determination unit 109 performs a switching process for switching the serving cell to the own cell or another cell. In the embodiment, especially, at the timing to switch the cell (AT: Activation Time) that is reported from the apparatus higher than the base station, the switching source base station, the switching target base station, and the apparatus that is higher than the base station simultaneously perform the switching processes.

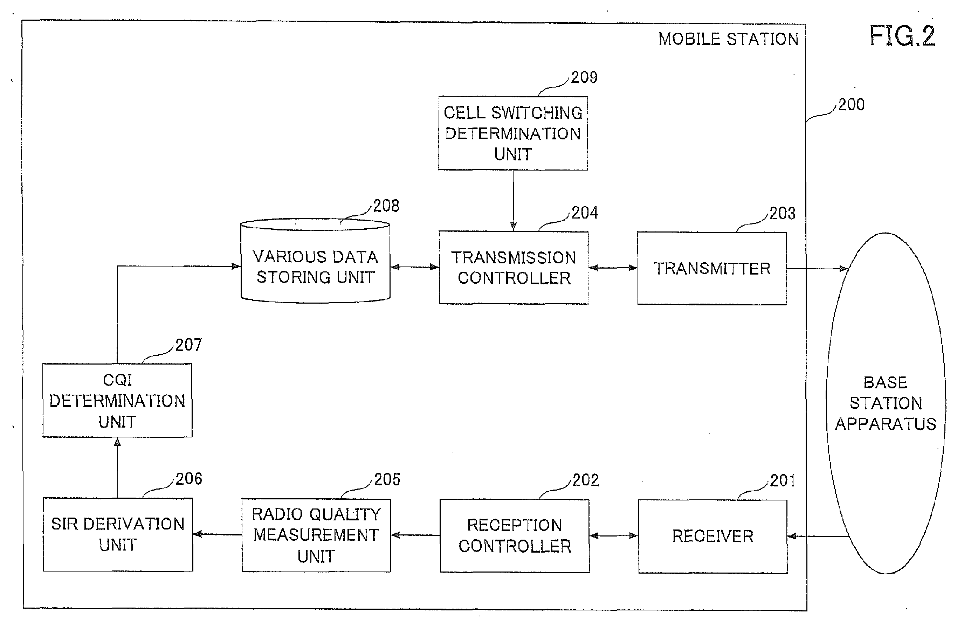

FIG. 2 shows a mobile station according to one embodiment. FIG. 2 shows a receiver 201; a reception controller 202; a transmitter 203; a transmission controller 204; a radio quality measurement unit 205; a SIR derivation unit 206; a CQI determination unit 207; a various-data storing unit 208; and a cell switching determination unit 209. FIG. 2 merely shows schematically elements that are particularly related to the embodiment, among various functional elements included in the mobile station. Thus, the way of dividing the functional elements shown in the figure is for the sake of convenience. For example, two or more functional elements may be realized by a single means. These functional elements may be realized by hardware, software, or a combination thereof. The mobile station is user equipment such as a cellular phone, an information terminal, a personal digital assistant, and a mobile personal computer.

The receiver 201 receives signals transmitted from network apparatuses. The network apparatuses include a base station apparatus, a radio network controller that controls the base station, and a higher apparatus of a core network (e.g., a switching system).

The reception controller 202 controls a reception process in the receiver 201.

The transmitter 203 transmits traffic data and control data from the mobile station to the network apparatus.

The transmission controller 204 controls a transmission process in the transmitter 203.

During HSDPA communication, the radio quality measurement unit 205 measures indexes that indicate radio quality in corresponding cells based on pilot signals (CPICH) that have been received from the serving cell and the cells other than the serving cell. The index of the radio quality may be represented by any suitable quantity, such as $Ec/N_0$, RSCP, and the path loss, for example.

The SIR derivation unit 206 derives SIRs from the corresponding indexes of the radio quality which have been calculated by the radio quality measurement unit 205. In the above explanation, "the indexes of the radio quality" are, for example, $Ec/N_0$, RSCP, or the path loss. The SIRs are derived from these. However, the definitions of such indexes are for the sake of convenience only. In the explanation below, "the radio quality" may be a measurement result of, for example, RSCP, $Ec/N_0$, and/or the pass loss; the SIR after despreading processing; or the CQI that is derived from the SIR. The radio quality is broadly defined to be a quantity that indicates whether the radio condition is good.

The CQI determination unit 207 determines, for the serving cell and for the cells other than the serving cell, the corresponding CQIs by using the corresponding SIRs that have been derived by the SIR derivation unit 206.

The various-data storing unit 208 stores, for example, various types of data and parameter values that are utilized in the mobile station. The various-data storing unit 208 stores, for example, the correspondence relationship between the SIRs and the CQIs.

The cell switching determination unit 209 determines whether the radio quality of the serving cell is degraded to the extent that a handover is required. During the HSDPA communication, it is determined whether the quality of the serving cell measured by the radio quality measurement unit 205 is degraded to the extent that a serving cell switching condition is satisfied. When it is degraded, a signal (event 1d) for reporting the condition to the network apparatus is transmitted to the base station apparatus.

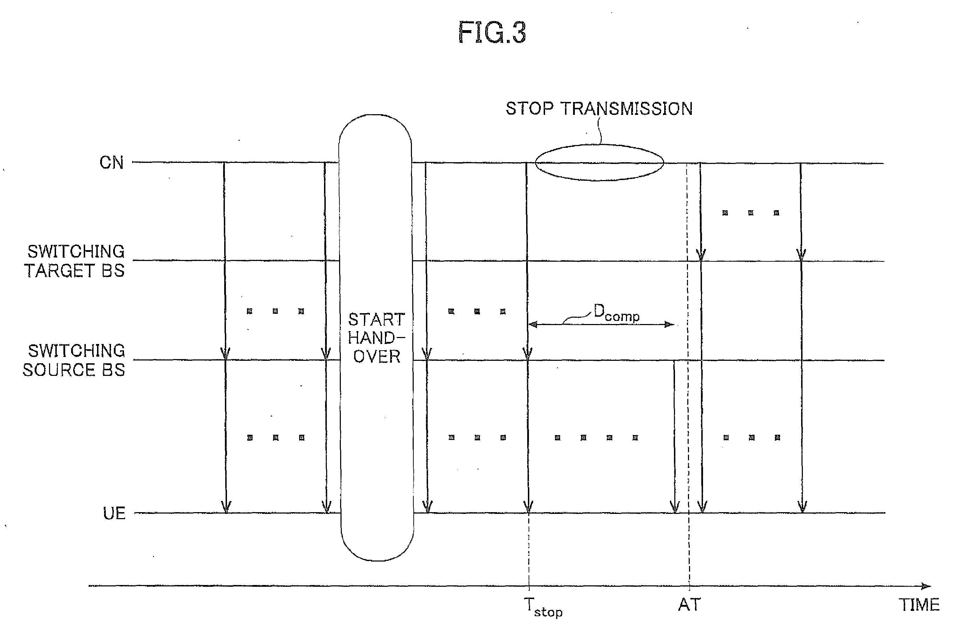

FIG. 3 shows an example of operations regarding the mobile station, the switching source base station, the switching target base station, and the network apparatus. The horizontal axis corresponds to the flow of time. First, the mobile station (UE) receives, by communication according to the HSDPA, the down link data from the core network (CN) through the switching source base station apparatus (BS). When the mobile station (UE) moves, for example, to the edge of the cell, the quality of the serving cell that is measured by the mobile station (UE) is degraded. When the quality of the serving cell is degraded to the extent that the serving cell switching condition is satisfied, the mobile station reports to the network apparatus that the event (the event 1d) occurs. Then, as indicated by "HANDOVER START" in the figure, processes for a handover are started. When the base station apparatus receives a message of the event 1d from the mobile station, the base station apparatus performs, together with the base station apparatus controller (RNC), processes for switching the serving cell at the side of the network apparatus. The network apparatus determines timing to switch the serving cell, and reports it to the mobile station, to the switching source base station apparatus, and to the switching target base station apparatus. The switching source base station apparatus determines timing to stop the reception ($T_{stop}$), and reports it to the network apparatus (CN). Here, the timing to stop the reception ($T_{stop}$) is the timing for the network apparatus (CN) to stop transmitting the down link data, which is addressed to the mobile station being switched to the destination of the handover, to the own device (the switching source base station apparatus).

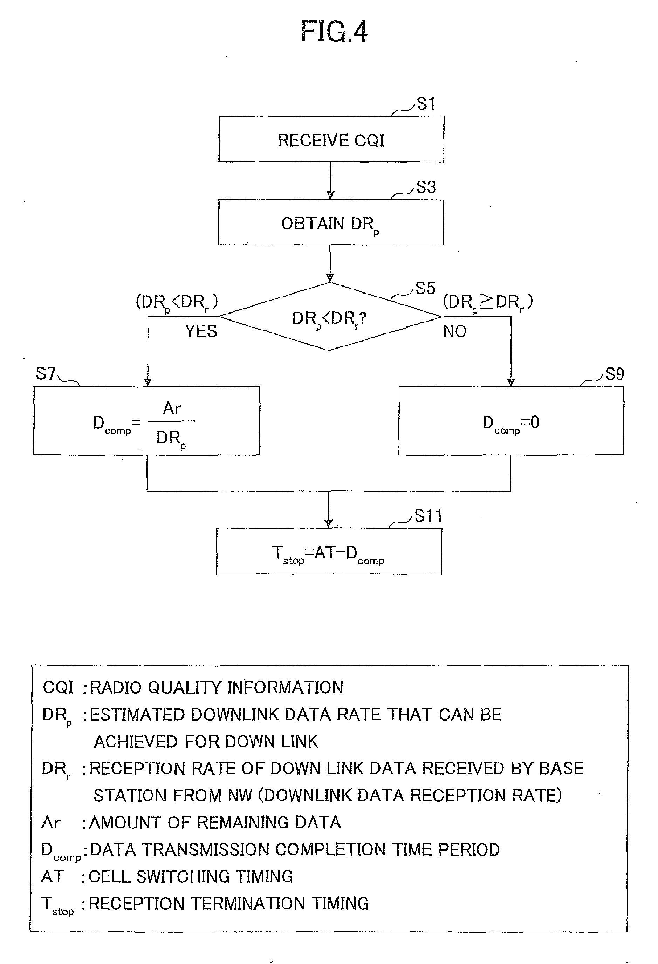

FIG. 4 shows a flowchart for determining the timing for the switching source base station apparatus to stop the reception ($T_{stop}$), which is shown in FIG. 3. Apart from whether or not the handover is performed, the mobile station receives the pilot signal (CPICH) from the base station apparatus of the serving cell, and measures the radio quality. The mobile station reports the measured radio quality information (for the sake of convenience of the explanation, it is set to be the CQI value) to the base station apparatus.

At step S1, the base station apparatus receives the radio quality information (the CQI value).

At step S3, the radio base station obtains an estimated value of the downlink transmission rate that is expected in a real environment (the estimated downlink data rate (DRp)), based on the received radio quality information (the CQI value). The estimated downlink data rate (DRp) is sequentially stored in the various-data storing unit 106 of the base station apparatus. The estimated downlink data rate (DRp) may be obtained by some calculations, or it may be derived in accordance with the predetermined correspondence relationship such as shown in FIG. 1B.

The radio base station measures the data rate for receiving, from the network apparatus, the down link data (the downlink data reception rate (DRr)) addressed to the mobile station performing the handover.

At step S5, the downlink data reception rate (DRr) is compared with the estimated downlink data rate (DRp) to find as to whether the downlink data reception rate (DRr) is greater than or equal to the estimated downlink data rate (DRp). When the estimated downlink data rate (DRp) is less than the downlink data reception rate (DRr), the flow proceeds to step S7. When the estimated downlink data rate (DRp) is greater than or equal to the downlink data reception rate (DRr), the flow proceeds to step S9.

When step S7 is reached, the downlink data reception rate (DRr) is greater than the estimated downlink data rate (DRp) (DRp < DRr). In this case, an amount of data that is greater than or equal to the amount of data transmitted from the base station apparatus to the mobile station is transmitted from the network apparatus to the base station apparatus. Therefore, the data waiting to be transmitted to the mobile station remains in the transmission data buffer 108, and it gradually increases. The transmission controller 104 (FIG. 1A) regularly or irregularly checks the transmission data buffer 108, and thereby the amount of the remaining data (Ar) is measured. The measurement result (Ar) is reported to the timing controller 107.

At step S7, the time to complete the transmission of the data (Ar) remaining in the transmission data buffer 108 (the data transmission completion time period ($D_{comp}$)) is estimated. The data transmission completion time period ($D_{comp}$) is derived by dividing the amount of the remaining data (Ar) by the estimated downlink data rate ((DRp).

$$D_{comp} = Ar\ /\ DRp$$

The data transmission completion time period

($D_{comp}$) means the time period required for transmitting the amount of the remaining data (Ar) with the data rate that can currently be reached in the down link (the estimated downlink data rate (DRp)). The data transmission completion time period ($D_{comp}$) is stored in the various-data storing unit 106.

On the other hand, when the flow has reached step S9, the downlink data reception rate (DRr) is less than or equal to the estimated downlink data rate (DRp) (DRp $\geq$ DRr). In this case, when the base station apparatus transmits the down link data received from the network apparatus to the mobile station, there will be no data that is waiting to be transmitted to the mobile station and that is increasing. In this case, the data transmission completion time period is set to be zero, and it is stored in the various-data storing unit 106.

$$D_{comp}\ =\ 0$$

Here, when the transmission data buffer 108 stores the data received from the network apparatus, the data received while the reception rate exceeds the estimated downlink data rate (DRp) and the data received while the reception rate is within a range that does not exceed may be separately stored, or such a distinction may not be provided.

At step S11, the switching source base station apparatus determines a point of time for the network apparatus to stop transmitting the down link data to the switching source base station apparatus. This point of time is the point of time at which the switching source base station apparatus terminates receiving the down link data, and it is referred to as "the timing to stop the reception ($T_{stop}$)," in the present application. In principle, the timing to stop the reception ($T_{stop}$) is derived by shifting the timing in the backward direction from the timing for switching the cell (AT) by the data transmission completion time period ($D_{comp}$).

$$T_{stop}\ =\ At\ -\ D_{comp}$$

However, taking the processing speeds of the hardware and the software of the mobile station into consideration, the timing to stop the reception ($T_{stop}$) may be set at a point of time that is prior to the point of time, which is shifted in the backward direction from the timing for switching the cell (AT) by the data transmission completion time period ($D_{comp}$), by a certain amount.

$$T_{stop}\ =\ AT\ -\ D_{comp}\ -\ \alpha$$

The value of $\alpha$ is an amount that can be suitably adjusted in accordance with various capabilities of mobile stations.

The base station apparatus reports the timing to stop the reception ($T_{stop}$), which has been calculated in such a way, to the network apparatus. After the handover of the target mobile station has been started, when the timing to stop the reception ($T_{stop}$) is reached, the network apparatus stops transmitting the down link data, which is addressed to the mobile station, to the base station apparatus.

As shown in FIG. 3, prior to the timing to stop the reception ($T_{stop}$), the switching source base station apparatus (BS) has been receiving the down link data from the network apparatus (CN). However, after the timing to stop the reception ($T_{stop}$), the switching source base station apparatus (BS) does not receive the down link data from the network apparatus (CN). Therefore, the data transmitted to the mobile station (UE) during the time period indicated by "$D_{comp}$" in the figure is the remaining data (Ar) that remains in the transmission data buffer 108 of the switching source base station apparatus (BS). All of this can be transmitted within the time period of $D_{comp}$. That is because the data transmission completion time period ($D_{comp}$) has been calculated as a necessary and sufficient time period for completing such transmission. Since the timing to stop the reception ($T_{stop}$) is substantially equal to ($AT-D_{comp}$), upon completion of the transmission of the remaining data, the time becomes the timing for switching the cell (AT), and the mobile station (UE), the switching source base station, the switching target base station, and the network apparatus simultaneously perform the processes for switching the serving cell. After this timing for switching (AT), the switching target base station apparatus (BS) receives the down link data from the network apparatus, and transmits it to the mobile station (UE).

As described, according to the embodiment, the mobile station (UE) can continue receiving the down link data from the switching source base station apparatus (BS) until immediately before the time becomes the timing for switching the cell (AT). Furthermore, after the timing for switching (AT), the mobile station (UE) can quickly start receiving the down link data from the switching target base station apparatus (BS). Therefore, around the timing for switching the cell (AT), the time period can be extremely shortened, during which the mobile station (UE) is not able to communicate. That is because the time period during which the mobile station (UE) is not able to communicate is merely the processing delay time of the hardware and the software of the mobile station. Further, since the data transmission completion time period ($D_{comp}$) is based on the downlink data rate which can currently be achieved by the mobile station (UE), the entire remaining data (Ar) can be transmitted to the mobile station (UE) within the time period. Therefore, after the timing for switching the cell (AT), the redundant transmission of the remaining data by the switching source base station (BS) is substantially eliminated.

According to the embodiment, the downlink data rate immediately prior to the switching of the serving cell is estimated as the estimated downlink data rate (DRp), and the amount of the transmission data that is buffered by the base station apparatus immediately prior to the switching of the serving cell (Ar) can be dynamically controlled (namely, it is possible to prevent the unsent data from being retained, after the timing for switching the cell (AT)). With this, it is not necessary for the mobile station that can achieve a high data transmission rate to wait for the time to become the timing for switching (AT) without being able to communicate, though there is no data to be received. Conversely, for the case of the mobile station which can only achieve a low data transmission rate, the time does not become the timing for switching (AT) prior to transmitting all the data from the base station apparatus, which is for prior to the switching, to the mobile station.

In the above, the explanation has been provided while referring to specific embodiments, but the embodiments are merely illustrative, and variations, modifications, alterations and substitutions could be conceived by those skilled in the art. For example, the present invention may be applied to any appropriate mobile communication system for performing the handover. For example, the present invention may be applied to a W-CDMA system, a HSDPA/HSUPA based W-CDMA system, an LTE system, an LTE-Advanced system, an IMT-Advanced system, a WiMAX based system, a Wi-Fi based system and the like. Specific examples of numerical values have been used in order to facilitate understanding of the invention. However, these numerical values are simply illustrative, and any other appropriate value may be used, except as indicated otherwise. Specific examples of formulae have been used in order to facilitate understandings of the invention. However, these formulae are simply illustrative, and any other appropriate formula may be used, except as indicated otherwise. The separations of the embodiments or the items are not essential to the present invention, and subject matter described in two or more items may be combined and used as necessary. Subject matter described in an item may be applied to the subject matter described in another item (provided that they do not contradict). For the convenience of explanation, the devices according to the embodiments of the present invention have been explained by using functional block diagrams. However, these devices may be implemented in hardware, software, or combinations thereof. The present invention is not limited to the above-described embodiments, and various variations, modifications, alterations, substitutions and so on are included, without departing from the spirit of the present invention.

The present international application claims priority based on Japanese Patent Application No. 2010-106575, filed on May 6, 2010, the entire contents of which are hereby incorporated by reference.

**Claims**

1. A base station apparatus for a mobile communication system comprising:

   a receiver that receives down link radio quality information from a mobile station;
   a data buffer that stores down link data to be transmitted to the mobile station;
   a transmitter that transmits the down link data to the mobile station; and
   a timing controller that determines an estimated downlink data rate indicating a data rate that can be achieved for a down link based on the down link radio quality information, and that calculates, when the estimated downlink data rate is less than a reception rate for receiving the down link data from a network apparatus, a data transmission completion time period based on an amount of data stored in the data buffer and the estimated downlink data rate,
   wherein, when the mobile station is to perform a handover, the timing controller reports to the network apparatus that the network apparatus should not transmit the down link data, the downlink data being addressed to the mobile station, to the base station apparatus at and subsequent to a point of time which is prior to timing for switching the base station apparatus by, at least, the data transmission completion time period.

2. The base station apparatus according to claim 1, wherein the data transmission completion time period is calculated by dividing the amount of data stored in the data buffer by the estimated downlink data rate.

3. The base station apparatus according to claim 1, further comprising:

   a data storing unit for storing a predetermined relationship between plural types of downlink radio quality information and estimated downlink data rates.

4. The base station apparatus according to claim 1, wherein, when the estimated downlink data rate is greater than or equal to the reception rate for receiving the down link data from the network apparatus, the timing controller sets the data transmission completion time period to be zero.

5. A method of a base station for a mobile communication system comprising:

   a step of receiving down link radio quality information from a mobile station;
   a step of storing down link data to be transmitted to the mobile station in a data buffer; and
   a step of transmitting the down link data to the mobile station in accordance with an instruction from a timing controller;
   wherein the timing controller determines an estimated downlink data rate indicating a data rate that can be achieved for a down link based on the down link radio quality information, and that calculates, when the estimated downlink data rate is less than a reception rate for receiving the down link data from a network apparatus, a data transmission completion time period based on an amount of data stored in the data buffer and the estimated downlink data rate, and
   wherein, when the mobile station is to perform a handover, the timing controller reports to the network apparatus that the network apparatus should not transmit the down link data, the downlink data being addressed to the mobile station, to the base station apparatus at and subsequent to a point of time which is prior to timing for switching the base station apparatus by, at least, the data transmission completion time period.

FIG.1A

BASE STATION APPARATUS

HIGHER NETWORK APPARATUS

TRANSMISSION DATA BUFFER 108

100

CELL SWITCHING DETERMINATION UNIT 109

TRANSMISSION CONTROLLER 104

TRANSMITTER 103

VARIOUS-DATA STORING UNIT 106

TIMING CONTROLLER 107

MOBILE STATION

RADIO QUALITY MEASUREMENT UNIT 105

RECEPTION CONTROLLER 102

RECEIVER 101

# FIG.1B

| RECEPTION CQI | ESTIMATED DOWNLINK DATA RATE [kbps] |
|---|---|
| 25 | 4000 |
| 20 | 3000 |
| 15 | 2000 |
| 10 | 1000 |
| 5 | 500 |

FIG.2

MOBILE STATION

EP 2 568 744 A1

209
CELL SWITCHING DETERMINATION UNIT

200

208
VARIOUS DATA STORING UNIT

204
TRANSMISSION CONTROLLER

203
TRANSMITTER

207
CQI DETERMINATION UNIT

206
SIR DERIVATION UNIT

205
RADIO QUALITY MEASUREMENT UNIT

202
RECEPTION CONTROLLER

201
RECEIVER

BASE STATION APPARATUS

# FIG.3

STOP TRANSMISSION

CN

SWITCHING
TARGET BS

START
HAND-
OVER

$D_{comp}$

SWITCHING
SOURCE BS

UE

$T_{stop}$       AT       TIME

EP 2 568 744 A1

# FIG.4

S1
RECEIVE CQI

S3
OBTAIN $DR_p$

S5
$DR_p < DR_r$ ?

$(DR_p < DR_r)$ YES

$(DR_p \geq DR_r)$ NO

S7
$$D_{comp} = \frac{Ar}{DR_p}$$

S9
$$D_{comp} = 0$$

S11
$$T_{stop} = AT - D_{comp}$$

CQI : RADIO QUALITY INFORMATION

$DR_p$ : ESTIMATED DOWNLINK DATA RATE THAT CAN BE ACHIEVED FOR DOWN LINK

$DR_r$ : RECEPTION RATE OF DOWN LINK DATA RECEIVED BY BASE STATION FROM NW (DOWNLINK DATA RECEPTION RATE)

Ar : AMOUNT OF REMAINING DATA

$D_{comp}$ : DATA TRANSMISSION COMPLETION TIME PERIOD

AT : CELL SWITCHING TIMING

$T_{stop}$ : RECEPTION TERMINATION TIMING

## INTERNATIONAL SEARCH REPORT

| International application No. |
| --- |
| PCT/JP2011/060479 |

**A. CLASSIFICATION OF SUBJECT MATTER**
*H04W36/02(2009.01)i, H04W88/08(2009.01)i*

According to International Patent Classification (IPC) or to both national classification and IPC

**B. FIELDS SEARCHED**

Minimum documentation searched (classification system followed by classification symbols)
H04W4/00-99/00

Documentation searched other than minimum documentation to the extent that such documents are included in the fields searched

| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2006-245913 A (Matsushita Electric Co., Ltd.), 14 September 2006 (14.09.2006), paragraphs [0030] to [0035], [0037], [0040] to [0046]; fig. 1 to 3 (Family: none) | 1-5 |
| Y | JP 2006-174286 A (Fujitsu Ltd.), 29 June 2006 (29.06.2006), paragraphs [0002] to [0008] & US 2006/0133323 A1 & EP 1672949 A1 & CN 1791249 A | 1-5 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 01 August, 2011 (01.08.11) | 09 August, 2011 (09.08.11) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003188775 A

- JP 2010106575 A

**Non-patent literature cited in the description**

- *3GPP TS25.331,* December 2009

- *3GPP TS25.214,* December 2006